# EUROPEAN PATENT APPLICATION

(11) **EP 4 841 486 A1**
(43) Date of publication of application: **18.11.2026**
(21) Application number: 26177450.9
(22) Date of filing: 08.05.2026
(51) Int. Cl.: G06F 21/31, G06Q 10/0833, G06Q 10/087, G06Q 30/018, H04L 9/40, H04W 12/02, H04W 12/47

(54) **SYSTEM FOR ENSURING AUTHENTICITY, TRACEABILITY AND OWNERSHIP OF ITEMS/OBJECTS**

(30) Priority: 12.05.2025 IT 202500010629
(71) Applicant: Tinexta Infocert S.p.A., 00196 Roma (IT)
(72) Inventor: LEONI, Fabrizio, 00196 Roma (IT); PEDANI, Lucrezia, 00196 Roma (IT)
(74) Representative: Studio Torta S.p.A.

(57) **Abstract**

The present invention concerns a system for ensuring authenticity, traceability and ownership of items/objects, comprising a server or a cloud system, a first software application installed on an electronic device of a first user (4) and an RFID or NFC chip (3) that is coupled to an item/object (2) to be tracked and that is associated with a respective identifier. The server/cloud system is programmed to: encrypt the respective identifier of the RFID/NFC chip (3) and information about the item/object (2) to be tracked thereby generating a digital product passport of the item/object (2); and generate and apply, to the digital product passport, a qualified electronic seal; wherein the digital product passport with the qualified electronic seal is stored on the RFID/NFC chip (3). The first software application is operable by the first user (4) to: read and decrypt the digital product passport stored on the RFID/NFC chip (3); and check authenticity and integrity of the digital product passport based on the qualified electronic seal.

## Description

### CROSS-REFERENCE TO RELATED APPLICATIONS

This patent application claims priority from Italian patent application no. 102025000010629 filed on May 12, 2025, the entire disclosure of which is incorporated herein by reference.

### TECHNICAL FIELD OF THE INVENTION

The present invention concerns a system for ensuring authenticity, traceability and ownership of items/objects.

### STATE OF THE ART

As is known, nowadays, methods to ensure authenticity of physical objects and to combat counterfeiting include solutions based on barcodes, QR codes, and Radio Frequency Identification (RFID) tags. However, these methods have vulnerabilities related to cloning and information alteration, which reduce the effectiveness of these solutions in ensuring security and trust. Near-Field Communication (NFC)-based systems have demonstrated superior potential but require further improvements to offer an equivalent level of security to the legal and operational needs of manufacturers and consumers.

### OBJECT AND SUMMARY OF THE INVENTION

The Applicant has carried out an in-depth study in order to develop a technological solution for ensuring authenticity of physical objects and combatting counterfeiting in an improving way with respect to currently known technical solutions.

Therefore, an object of the present invention is that of providing a technology such that to alleviate, at least in part, the technical drawbacks of the currently known technical solutions for ensuring authenticity of physical objects and combatting counterfeiting.

This and other objects are achieved by the present invention in that it relates to a system for ensuring authenticity, traceability and ownership of items/objects, as defined in the appended claims.

In particular, the system according to the present invention comprises a server or a cloud system, a first software application installed on an electronic device of a first user and a radiofrequency identification (RFID) or Near-Field Communication (NFC) chip that is coupled to an item/object to be tracked and that is associated with a respective identifier.

The server/cloud system is programmed to:
- encrypt the respective identifier of the RFID/NFC chip and information about the item/object to be tracked thereby generating a digital product passport of the item/object; and
- generate and apply, to the digital product passport, a qualified electronic seal;
wherein the digital product passport with the qualified electronic seal is stored on the RFID/NFC chip.

The first software application is operable by the first user to:
- read and decrypt the digital product passport stored on the RFID/NFC chip; and
- check authenticity and integrity of the digital product passport based on the qualified electronic seal.

### BRIEF DESCRIPTION OF THE DRAWINGS

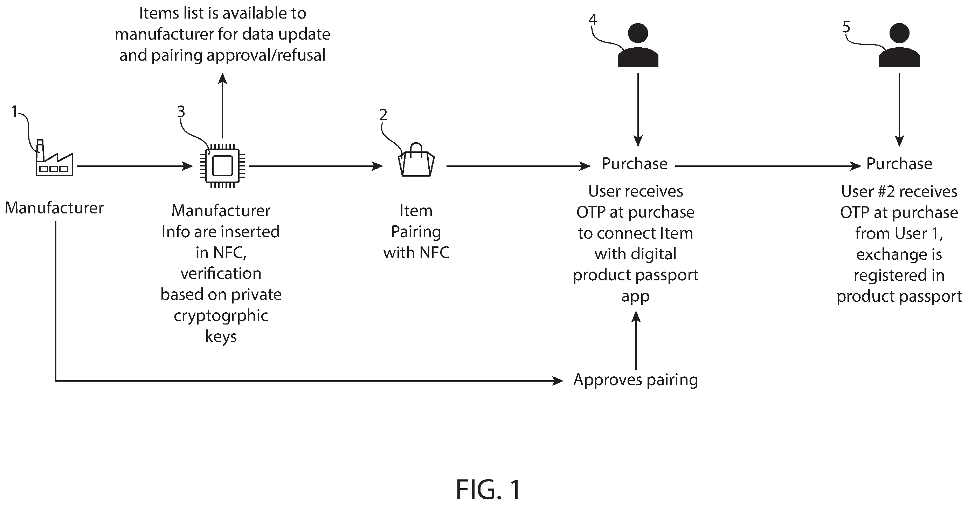

For a better understanding of the present invention, preferred embodiments, which are intended purely by way of non-limiting, non-binding examples, will now be described with reference to the attached drawing (not to scale), which schematically illustrates steps performed to track an item from its manufacturing to its purchasing by a first buyer/user and then by a second buyer/user according to an embodiment of the present invention.

### DESCRIPTION OF EMBODIMENTS OF THE INVENTION

The following description is presented to enable a person skilled in the art to comprehend, make and use the invention. Various modifications to the embodiments will be readily apparent to those skilled in the art, without departing from the scope of the present invention as claimed. Thence, the present invention is not intended to be limited to the embodiments shown and described but is to be accorded with the widest scope of protection consistent with the features defined in the appended claims.

The present invention concerns a system for ensuring authenticity, traceability and ownership of items/objects, comprising a server or a cloud system, a first software application installed on an electronic device of a first user and a radiofrequency identification (RFID) or Near-Field Communication (NFC) chip that is coupled to an item/object to be tracked and that is associated with a respective identifier.

The server/cloud system is programmed to:
- encrypt the respective identifier of the RFID/NFC chip and information about the item/object to be tracked thereby generating a digital product passport of the item/object; and
- generate and apply, to the digital product passport, a qualified electronic seal;
wherein the digital product passport with the qualified electronic seal is stored on the RFID/NFC chip.

The first software application is operable by the first user to:
- read and decrypt the digital product passport stored on the RFID/NFC chip; and
- check authenticity and integrity of the digital product passport based on the qualified electronic seal.

Preferably, the first software application is operable by the first user to be paired with the item/object by:
- reading and decrypting the digital product passport stored on the RFID/NFC chip;
- checking authenticity and integrity of the digital product passport based on the qualified electronic seal; and
- entering a first one-time password received when the first user has purchased said item/object;
wherein the server/cloud system, in response to a request by the first user to be paired with the item/object and if the first one-time password is correct, is programmed to:
- encrypt the respective identifier of the RFID/NFC chip, the information about the item/object and information about the first user thereby generating an updated digital product passport of the item/object;
- generate and apply, to the updated digital product passport, a qualified electronic seal; and
- send to the first software application a confirmation of the pairing of the first user with the item/object;
wherein the first software application, in response to the confirmation of the pairing of the first user with the item/object received from the server/cloud system, is configured to store the updated digital product passport with the qualified electronic seal on the RFID/NFC chip.

Conveniently, the first software application is operable by the first user to:
- read and decrypt the digital product passport stored on the RFID/NFC chip;
- check authenticity and integrity of the digital product passport based on the qualified electronic seal; and
- produce a digital certificate of ownership of the item/object based on the digital product passport and the qualified electronic seal;
wherein the server/cloud system is configured to:
- upon request, provide a digital certificate of ownership of the item/object based on the digital product passport and the qualified electronic seal.

Preferably, the system further comprises a second software application that is installed on an electronic device of a second user and that is operable by the latter to be paired with the item/object by:
- reading and decrypting the digital product passport stored on the RFID/NFC chip;
- checking authenticity and integrity of the digital product passport based on the qualified electronic seal; and
- entering a second one-time password received from the server/cloud system upon first user's request when the second user has purchased said item/object from said first user;
wherein the server/cloud system, in response to a request by the second user to be paired with the item/object and if the second one-time password is correct, is programmed to:
- encrypt the respective identifier of the RFID/NFC chip, the information about the item/object and information about the second user thereby generating an updated digital product passport of the item/object;
- generate and apply, to the updated digital product passport, a qualified electronic seal; and
- send to the second software application a confirmation of the pairing of the second user with the item/object;
wherein the second software application, in response to the confirmation of the pairing of the second user with the item/object received from the server/cloud system, is configured to store the updated digital product passport with the qualified electronic seal on the RFID/NFC chip.

Conveniently, the first software application is operable, after the second user has purchased the item/object from the first user, to send the request for the second one-time password to the server/cloud system.

Conveniently, the second software application is operable by the second user to:
- read and decrypt the digital product passport stored on the RFID/NFC chip;
- check authenticity and integrity of the digital product passport based on the qualified electronic seal; and
- produce a digital certificate of ownership of the item/object based on the digital product passport and the qualified electronic seal;
wherein the server/cloud system is configured to:
- upon request, provide a digital certificate of ownership of the item/object based on the digital product passport and the qualified electronic seal.

It is important to note that, if an item/object is made up by a plurality of pieces/components, the present invention is conveniently implemented by means of a plurality of RFID/NFC tags, each coupled with/to a respective piece/component of the item/object, whereby it is possible to ensure authenticity, traceability and ownership of each single piece/component of the item/object.

More specifically, the present invention concerns a technological solution, in particular a system, for ensuring authenticity, traceability and ownership of physical objects through a combination of RFID (preferably NFC) technology, cryptography and private key architecture, with applications in fashion, luxury goods, food, pharmaceutical and other sectors.

In particular, a Qualified Trust Service Provider (QTSP) uses a combination of RFID (preferably NFC) technology, advanced encryption and private key architecture to ensure security and authenticity of a physical object.

Each RFID/NFC tag has a unique, immutable ID set during production, which is cryptographically associated with the object via a digital product passport. The information stored in the RFID/NFC tag cannot be cloned or altered, thus ensuring non-duplicability.

Furthermore, by using qualified digital certificates and electronic signatures based on ETSI standards (e.g., ETSI EN 319 411), it can legally guarantee not only the authenticity of the product, but also the identity of the manufacturer.

Verification of the identity of the manufacturer is based on private cryptographic keys maintained in highly reliable secure environments, providing a legal guarantee of the product's origin. This approach strengthens protection against counterfeiting and increases confidence in the supply chain.

This service can be especially useful for high-value items, where authentication is essential. For example, in the case of second-hand luxury bags, identification is crucial yet challenging and verifying the historical chain of ownership becomes fundamental. As for the example of luxury and design items, it is worth noting that the price ticket can range in the thousand euros and authentication can be at times tricky, price and time consuming, especially with the rise of the so-called "superfakes", i.e., knockoff items that look like real designer items due to the precision and attention to details during manufacturing.

Authentication is often required for high-ticket items but is based on the experience of the authenticator.

The present invention allows to address:
- the problem of counterfeiting and the difficulty of guaranteeing the authenticity and traceability of physical objects throughout their lifetime;
- it also introduces a system for attributing product ownership to the consumer, providing a solution that improves transparency and confidence in the production chain;
- legal protection for producers and consumers, especially on the second-hand market.

The present invention is preferably implemented by means of a Qualified Trust Service Provider (QTSP) and uses a combination of RFID/NFC, advanced encryption and private key architecture to ensure security, authenticity and traceability of a physical object. Each RFID/NFC tag has a unique immutable ID set during production, which is cryptographically associated with the original object and signed with a qualified seal. The information stored in the RFID/NFC tag cannot be cloned or altered, thus ensuring the non-duplicability of the physical tag.

The authenticity of the product and the identity of the manufacturer are legally guaranteed using qualified digital seals and electronic signatures compliant with ETSI standards (e.g., ETSI EN 319 411).

The private cryptographic keys required for these operations are maintained in secure and trusted environments, such as certified Hardware Security Modules, (HSMs) or certified devices such as InfoCert DeviceID Edge, ensuring protection against counterfeiting and increasing trust in the supply chain. During the production process, secure data is written into the RFID/NFC tag using InfoCert cloud services with certified HSMs, or through an on-site appliance equipped with certified hardware for secure key holding. This process allows the unique ID of the RFID/NFC tag to be securely associated with the object, ensuring that the information is authentic and cannot be falsified. The use of certified hardware for cryptographic key management adds an additional layer of security, ensuring that only authorized devices can write or update data in RFID/NFC tags, reducing the risk of tampering.

The invention introduces an ownership process to the consumer, who can onboard the item by verifying its authenticity via a mobile app. After verifying that the object is not already registered by others, the consumer can complete an onboarding process that includes verifications such as phone number, email address, ID and biometric verification via "assisted selfie". At the end of the process, a certificate of ownership is issued in verifiable credential format, digitally signed by the manufacturer, which legally guarantees ownership of the product, traceable and verifiable throughout its life.

The present invention can be used in various sectors, such as fashion, luxury goods, food and pharmaceuticals, to ensure that each product is authentic and that its origin can be legally verified. In addition, the certificate of ownership can be used for subsequent transfers of ownership or to prove the lawful possession of the item, while also providing a means of loyalty for the buyer through participation in promotional events, requests for feedback or dedicated assistance.

The attached Figure schematically illustrates steps performed to track an item from its manufacturing to its purchasing by a first buyer/user and then by a second buyer/user according to an embodiment of the present invention.

In particular, a manufacturer 1 manufactures an item 2 to be sold, provides an RFID, or preferably an NFC, chip 3 associated with a unique/univocal identification code or identifier (ID), encrypts said ID along with information about the manufactured item 2 (e.g., type, model, serial number, etc. of the item 2), and stores the encrypted ID and the encrypted information about the manufactured item 2 on the RFID/NFC chip 3 thereby generating a digital product passport of the item 2.

When a first buyer/user 4 buys the item 2, he/she receives a One-Time Password (OTP), for example via SMS or via a specific software application (app) - e.g., a digital product passport app - for him/her to be inserted into the digital product passport of the item 2. If he/she types the OTP correctly, the manufactures 1 approves the pairing and also information about the first buyer/user 4 (e.g., name, address, etc.) is encrypted and stored on the RFID/NFC chip 3 along with the encrypted ID and the encrypted information about the manufactured item 2, namely: the information about the first buyer/user 4 is added to the digital product passport of the item 2 stored on the RFID/NFC chip 3.

When a second buyer/user 5 buys the item 2 from the first buyer/user 4, he/she receives an OTP. Then, if he/she types the OTP correctly, information about the second buyer/user 5 (e.g., name, address, etc.) is encrypted and stored on the RFID/NFC chip 3 in place of that of the first buyer/user 4, namely: the first buyer/user 4 is replaced by the second buyer/user 5 in the digital product passport of the item 2 stored on the RFID/NFC chip 3.

Conveniently, the manufacturer 1 stores an item list including the digital product passports of all the manufactured items for data update and pairing approval/refusal.

Some use cases will be presented hereinafter describing the interactions between users (customer and claimer) and the system.

### User Use Cases

| Use Case | Description | |
|---|---|---|
| Use Case 1.1 | • User purchases item | |
| Purchase | | ∘ During purchase, the user receives an OTP. |
| | | ∘ User opens app and through OTP connects its personal app to item NFC. |
| Use Case 1.2 | • After login and pairing, the user can access and read | |
| Access Information | | |
| | information in the product wallet. | |

### Manufacturer Use Case

| Use Case | Description | |
|---|---|---|
| Use case 2.1 | • An NFC tag is inserted in the item. | |
| Bind | | |
| | • The enterprise starts the registration of a new item. | |
| | • The system proceeds to pair NFC tag to product number and creates a digital product passport with item information. | |
| Use case 2.2 | • Enterprise can see the list of connected NFCs. | |
| Handle Device | | |
| | • Can select a single device to | |
| | | ∘ Modify an item's data, |
| | | ∘ Set your own status with respect to the |
| | | item, |
| | | ∘ Authorize another user to the item (i.e. user). |
| Use case 2.3 | • A qualified digital certificate is controlled by enterprise and is used to seal data stored in all NFCs. | |
| Enterprise Identification | | |
| | • Information about manufacturer is inserted. | |
| | • Sealing and verification are based on private cryptographic keys maintained in highly reliable secure environments. | |
| Use case 2.4 | • Manufacturer receives notification of an attempt to register his own device to user's app and approves or | |
| Handle Purchase Identification | | |
| | denies request. | |

### Claimer Use Case

| Use Case | Description |
|---|---|
| Use Case 3.1 | • The user starts the app installed on his/her mobile device and logs in. |
| Claim Product | |
| | • Users read the NFC in the item. Each NFC tag has a unique, immutable ID set. |
| | • The server verifies the item's device ID in the NFC. |
| | • The server uses the ID of the item to trace back to user. |
| | • The manufacturer receives a claim (purchase) notification. |
| | • The manufacturer accepts or rejects claim notification. |
| | • The manufacturer accepts or rejects the claim notification (e.g. may receive proof of purchase). |
| | • User receives claim outcome. |

### Second User Use Case

| Use Case | Description |
|---|---|
| Use case 4.1 | • Second user purchases item. |
| Claim Product from Second User | |
| | • First user produces a second OTP. |
| | • Second user opens app and inserts OTP to start pairing with item |
| | • First user accepts pairing claim |
| | • Exchange is registered in product passport |

Conveniently, a method implemented by the system according to the present invention can include the following steps:
1. Read Data from Item: The first step involves reading data from the object using an NFC-enabled device. This ensures that the unique, immutable ID set during production is correctly identified and associated with the item.
2. Encrypt Data: The data read from the object is then encrypted using advanced cryptographic techniques, such as elliptic curve public key cryptography. This step ensures that the data cannot be altered or cloned, maintaining its integrity and security.
3. Associate Data with Item: The encrypted data is cryptographically associated with the item unique ID (serial number or equivalent data). This association is signed with a qualified digital seal, ensuring the authenticity and non-duplicability of the information.
4. Store Data Securely: The encrypted and associated data is stored securely in the NFC tag. The use of certified hardware for cryptographic key management ensures that only authorized devices can write or update data in the NFC tags, reducing the risk of tampering.
5. Verify Manufacturer Identity: The identity of the manufacturer is verified using private cryptographic keys maintained in highly reliable secure environments. This provides a legal guarantee of the product's origin and strengthens protection against counterfeiting.
6. Issue Certificate of Ownership: After the item is secured, a certificate of ownership is issued in a verifiable credential format. This certificate is digitally signed by the manufacturer and legally guarantees ownership of the product, traceable and verifiable throughout its life. The certificate is then written in the tag memory to ensure the possibility to verify it locally.

The present invention can be advantageously exploited in the following industries/sectors and/or for the following applications:
- Fashion industry (product authentication);
- Logistics (tracing high-value products);
- Made in Italy/artisanal products;
- Art industry;
- Design sector;
- Medical devices.

The innovative features and technical advantages of the present invention are immediately clear from the foregoing. Anyway, it is worth noting that the combination of RFID/NFC technology and advanced cryptography guarantees the non-duplicability of the physical label, ensuring product security and authenticity. The use of qualified digital seals and verifiable credentials offers legal protection for both producers and consumers, reducing the risk of counterfeiting and increasing confidence in the production chain. Furthermore, the continuous traceability of the product throughout its life enhances transparency and contributes to a safer ecosystem.

The invention complies with European (eIDAS) regulations on electronic signatures and digital seals, ensuring that the entire process meets the legal standards required to guarantee the authenticity and ownership of physical products.

In conclusion, it is clear that modifications and variants can be made to the present invention, all falling within the scope of the invention, as defined in the appended claims.

## Claims

1. System for ensuring authenticity, traceability and ownership of items/objects, comprising a server or a cloud system, a first software application installed on an electronic device of a first user (4) and an RFID or NFC chip (3) that is coupled to an item/object (2) to be tracked and that is associated with a respective identifier;
wherein the server/cloud system is programmed to:
• encrypt the respective identifier of the RFID/NFC chip (3) and information about the item/object (2) to be tracked thereby generating a digital product passport of the item/object (2); and
• generate and apply, to the digital product passport, a qualified electronic seal;
wherein the digital product passport with the qualified electronic seal is stored on the RFID/NFC chip;
wherein the first software application is operable by the first user (4) to:
• read and decrypt the digital product passport stored on the RFID/NFC chip (3); and
• check authenticity and integrity of the digital product passport based on the qualified electronic seal;
wherein the first software application is operable by the first user (4) to be paired with the item/object (2) by:
• reading and decrypting the digital product passport stored on the RFID/NFC chip (3);
• checking authenticity and integrity of the digital product passport based on the qualified electronic seal; and
• entering a first one-time password received when the first user (4) has purchased said item/object (2);
wherein the server/cloud system, in response to a request by the first user (4) to be paired with the item/object (2) and if the first one-time password is correct, is programmed to:
• encrypt the respective identifier of the RFID/NFC chip (3), the information about the item/object (2) and information about the first user (4) thereby generating an updated digital product passport of the item/object (2);
• generate and apply, to the updated digital product passport, a qualified electronic seal; and
• send to the first software application a confirmation of the pairing of the first user (4) with the item/object (2);
wherein the first software application, in response to the confirmation of the pairing of the first user (4) with the item/object (2) received from the server/cloud system, is configured to store the updated digital product passport with the qualified electronic seal on the RFID/NFC chip (3).
**characterized by** further comprising a second software application that is installed on an electronic device of a second user (5) and that is operable by the latter to be paired with the item/object (2) by:
• reading and decrypting the digital product passport stored on the RFID/NFC chip (3);
• checking authenticity and integrity of the digital product passport based on the qualified electronic seal; and
• entering a second one-time password received from the server/cloud system upon first user's request when the second user (5) has purchased said item/object (2) from said first user (4);
wherein the server/cloud system, in response to a request by the second user (5) to be paired with the item/object (2) and if the second one-time password is correct, is programmed to:
• encrypt the respective identifier of the RFID/NFC chip (3), the information about the item/object (2) and information about the second user (5) thereby generating an updated digital product passport of the item/object (2);
• generate and apply, to the updated digital product passport, a qualified electronic seal; and
• send to the second software application a confirmation of the pairing of the second user (5) with the item/object (2);
wherein the second software application, in response to the confirmation of the pairing of the second user (5) with the item/object (2) received from the server/cloud system, is configured to store the updated digital product passport with the qualified electronic seal on the RFID/NFC chip (3).

2. The system of claim 1, wherein the first software application is operable, after the second user (5) has purchased the item/object (2) from the first user (4), to send the request for the second one-time password to the server/cloud system.

3. The system according to claim 1 or 2, wherein the second software application is operable by the second user (5) to:
• read and decrypt the digital product passport stored on the RFID/NFC chip (3);
• check authenticity and integrity of the digital product passport based on the qualified electronic seal; and
• produce a digital certificate of ownership of the item/object (2) based on the digital product passport and the qualified electronic seal;
and wherein the server/cloud system is configured to:
• upon request, provide a digital certificate of ownership of the item/object (2) based on the digital product passport and the qualified electronic seal.

4. The system according to any claim 1-3, wherein the first software application is operable by the first user (4) to:
• read and decrypt the digital product passport stored on the RFID/NFC chip (3);
• check authenticity and integrity of the digital product passport based on the qualified electronic seal; and
• produce a digital certificate of ownership of the item/object (2) based on the digital product passport and the qualified electronic seal;
and wherein the server/cloud system is configured to:
• upon request, provide a digital certificate of ownership of the item/object (2) based on the digital product passport and the qualified electronic seal.
